# NEUE EUROPÄISCHE PATENTSCHRIFT

(11) **EP 1 213 193 B2**
(45) Veröffentlichungstag und Bekanntmachung des Hinweises auf die Entscheidung über den Einspruch: **28.11.2007**
(45) Hinweis auf die Patenterteilung: 20.07.2005
(21) Anmeldenummer: 01128073.2
(22) Anmeldetag: 27.11.2001
(51) Int. Cl.: B60R 21/20, B26D 3/00

(54) **Überzug für ein Armaturenbrett, ein Lenkrad oder dergleichen**
Covering for a dashboard, a steering wheel or the like
Habillage pour un tableau de bord, un volant ou similair

(30) Priorität: 09.12.2000 DE 10061438
(43) Veröffentlichungstag der Anmeldung: 12.06.2002
(73) Patentinhaber: Eissmann Automotive Deutschland GmbH, 72574 Bad Urach (DE)
(72) Erfinder: Yaldir, Tanju, 72800 Eningen u.A. (DE); Kühfuss, Jürgen, 72581 Dettingen (DE)
(74) Vertreter: Mammel, Ulrike

(56) Entgegenhaltungen:
- EP-A- 0 639 481
- EP-A- 0 764 563
- EP-A- 1 057 698
- WO-A-99/01317
- US-A- 5 498 022
- US-A- 5 632 914
- US-A- 5 650 115
- US-A- 6 070 901

## Beschreibung

Die Erfindung betrifft einen Überzug für ein Armaturenbrett, ein Lenkrad oder dergleichen mit einem integrierten Airbag nach dem Oberbegriff des Anspruchs 1.

In nahezu allen Kraftfahrzeugen sind heutzutage auf der Beifahrerseite Airbags im Armaturenbrett integriert. Bisher wird der Überzug des Armaturenbretts im Bereich des Airbags ausgespart. Dort sitzt dafür der Deckel des Airbagkastens.

Zunehmend besteht jedoch seitens der Automobilindustrie der Wunsch, die Airbags möglichst unsichtbar im Kraftfahrzeug zu integrieren. Aus diesem Grund sind bereits Überzüge für Armaturenbretter vorgeschlagen worden, die auch den Airbagkastendeckel abdecken und im Bereich der Berandung des Airbagkastendeckels von der Rückseite her angeritzt sind, um an dieser Stelle eine Sollbruchstelle zu definieren, wenn sich der Airbag entfaltet.

Da die Überzüge jedoch immer häufiger aus Leder hergestellt sind, das keine homogenen Materialeigenschaften hat und in seiner dreidimensionalen Faserstruktur eine sehr hohe Festigkeit aufweist, hat sich herausgestellt, dass dieses Vorritzen des Überzugmaterials sehr stark erfolgen muss, damit sich der Airbag in jedem Fall ungehindert entfalten kann. Damit ist aber dann das Überzugmaterial im Bereich der Materialschwächung so dünn, dass durch die in einem Kraftfahrzeug herrschenden starken Temperatur- und Feuchtigkeitsunterschiede sich die Materialschwächungslinie auch auf der Außenseite abbildet. Damit wird jedoch der Zweck einer unsichtbaren Unterbringung des Airbags nicht erreicht.

Aus der EP 1 057 698 A1, der US 6,070,901 A, der US 5,650,115 A und der EP 0 764 563 A2 sind Überzüge für Lenkräder bzw. Armaturenbretter mit integrierten Airbags bekannt, die entlang der Berandung des Airbagkastendeckels perforiert oder zum Teil perforiert sind. Die Perforationsöffnungen in den flexiblen Überzügen weisen jedoch alle einen konstanten Durchmesser über die gesamte Materialdicke auf, was bedeutet, dass an der Oberfläche relativ große Perforationsöffnungen zu sehen sind, da diese Öffnungen aus Sicherheitsgründen nicht zu klein gewählt werden dürfen.

Aus der US 5,632,914 ist ein Überzug aus einer dünnen elastischen thermoplastischen oder hitzehärtbaren Kunststoffhaut für ein Armaturenbrett mit einem integrierten Airbag bekannt. Der Überzug weist im Bereich der Berandung des Airbagkastendeckels Löcher auf, die mittels eines Lasers eingebracht werden.

Die WO 99/01317 betrifft ein Verfahren zur Herstellung einer Airbagabdeckung, bei dem in einen Schichtaufbau aus einem thermoplastischen Basismaterial, einer thermoplastischen Zwischenschicht und einer thermoplastischen Dekorfolie von der Seite des Basismaterials her Schnitte mittels eines Lasers eingebracht werden.

Der vorliegenden Erfindung liegt die Aufgabe zugrunde, einen Überzug für ein Armaturenbrett oder dergleichen mit einem integrierten Airbag zu schaffen, der den Airbag nach außen hin unsichtbar abdeckt und dennoch ein zuverlässiges Öffnen des Airbags im Bedarfsfall gewährleistet.

Die Aufgabe wird mit einem Überzug mit den Merkmalen des Anspruchs 1 gelöst. Die Perforation weist Materialdurchbrüche auf, so dass beim Entfalten des Airbags lediglich die Materialstege zwischen den Durchbrüchen aufgetrennt werden müssen, was sich durch eine entsprechende Dichte der Durchbrüche der Perforation sicherstellen lässt. Die Durchbrüche im Material können dabei relativ klein gehalten werden, so dass sie von der Außenseite her kaum zu sehen sind. Dies gilt insbesondere für das leicht elastische Überzugsmaterial, Leder und Kunstleder.

Die Perforationsöffnungen können auch zusätzlich mit einer Spachtelmasse oder Kleber oder dergleichen ausgefüllt sein. Bei der Herstellung des Überzugs aus Leder wird das Leder zugerichtet oder noch unzugerichtet perforiert und kann dann gespachtelt werden. Zum Zuspachteln der Perforationsdurchbrüche eignet sich beispielsweise ein Lederspachtel, ggf. mit einem Zusatz. Diese Spachtelmasse sorgt dafür, dass die Öffnungen nach außen vollkommen unsichtbar sind und auch bei starken Temperaturschwankungen die Sollbruchstelle visuell nicht erkennbar wird.

Dennoch behindert die Spachtelmasse ein Auftrennen des Überzugs entlang der Perforationslinie im Notfall nicht.

Bei Verwendung eines Klebers zum Ausfüllen der Durchbrüche hat dieser die Funktion, die Perforation so wieder zusammenzufügen, dass eine definierte Durchstoßkraft für den Airbag gewährleistet ist. Der Kleber darf nur eine Restkraft aufweisen, damit die Auslösung des Airbags nicht verhindert wird.

Die Perforation kann jedoch auch optisch betont werden. Es kann dazu beispielsweise ein Faden zur Simulation einer Naht durch die Perforationslöcher hindurchgezogen werden.

Die Löcher der Perforation können durch Stanzen, mittels einer Nadel, einer Messerklinge oder eines Schneidegeräts hergestellt sein. Eine andere Herstellungsmöglichkeit besteht darin, die Löcher durch Durchschießen des Materials des Überzugs mit einem Hochdruckwasserstrahls zu erzeugen. Dabei sollte zur Herstellung der Löcher Material abgetragen, entfernt, eingeschnitten oder dgl. werden.

In der Praxis haben sich Materialdicken von 0,6 mm bis 2,8 mm für den Überzug bewährt. Dabei kann die Perforation Löcher mit einem Durchmesser von 0,1 mm bis 0,5 mm aufweisen.

Der Abstand der einzelnen Löcher sollte vorzugsweise so bemessen sein, dass der Überzug beim Öffnen des Airbags sich entlang der Perforationslinie auftrennt.

Die Perforationsöffnungen sind außerdem auf der dem Airbag zugewandten Seite des Überzugs mit einem größeren Durchmesser versehen als auf der Sichtseite. Die Sicht- und/oder die Airbagseite können außerdem mit einer Lederzurichtung, einem Schaum oder dergleichen lackiert sein. Auch ein mehrlagiger Aufbau des Überzugs ist möglich.

## Patentansprüche

1. Überzug für ein Armaturenbrett, ein Lenkrad oder dergleichen mit einem integrierten Airbag, der auch den Airbagkasten abdeckt und im Bereich der Berandung des Airbagkastendeckels perforiert ist, wobei die Perforationsöffnungen durch Stanzen, mittels einer Nadel, einer Messerklinge oder einem Schneidgerät oder eines Hochdruckwasserstrahls hergestellt sind und der Überzug aus Leder oder Kunstleder, hergestellt ist,
**dadurch gekennzeichnet, dass** die Perforationsöffnungen auf der dem Airbag zugewandten Seite des Überzugs einen größeren Durchmesser aufweisen als auf der Sichtseite des Überzugs.

2. Überzug nach Anspruch 1, **dadurch gekennzeichnet, dass** die Perforationsöffnungen mit einer Spachtelmasse, einem Kleber oder dergleichen ausgefüllt sind.

3. Überzug nach Anspruch 1 oder Anspruch 2, **dadurch gekennzeichnet, dass** er eine Dicke von 0,6 bis 2,8 mm aufweist.

4. Überzug nach einem der Ansprüche 1 bis 3, **dadurch gekennzeichnet, dass** die Perforation Öffnungen mit einem Durchmesser von 0,1 mm bis 0,5 mm aufweist.

5. Überzug nach einem der Ansprüche 1 bis 4, **dadurch gekennzeichnet, dass** er auf der Sichtseite mit einer Lederzurichtung, einem Schaum oder dergleichen lackiert ist.

6. Überzug nach einem der Ansprüche 1 bis 5, **dadurch gekennzeichnet, dass** seine dem Airbag zugewandte Seite mit einer Lederzurichtung, einem Schaum oder dergleichen lackiert ist.

7. Überzug nach einem der Ansprüche 1 bis 5, **dadurch gekennzeichnet, dass** er mehrlagig ist.

8. Verfahren zur Herstellung eines Überzugs nach einem der Ansprüche 1 bis 7, **dadurch gekennzeichnet, dass** das Leder im noch ungerichteten Zustand im Bereich der Berandung des Airbagkastens perforiert wird.

9. Verfahren nach Anspruch 8, **dadurch gekennzeichnet, dass** die Perforationsöffnungen zugespachtelt werden.

## Claims

1. Covering for a dashboard, steering wheel or the like with an integrated air bag, which also covers the air bag box lid and is perforated in the region of the boundary of the air bag box lid and is made of leather or artificial leather, **characterized in that** the perforation holes have a larger diameter on the side of the covering turned towards the air bag than on the exposed side of the covering.

2. Covering according to Claim 1, **characterized in that** the perforation holes are filled with filler paste, adhesive or the like.

3. Covering according to Claim 1 or Claim 2, **characterized in that** it has a thickness of 0.6 mm to 2.8 mm.

4. Covering according to any one of Claims 1 to 3, **characterized in that** the perforation has holes with a diameter of 0.1 mm to 0.5 mm.

5. Covering according to any one of Claims 1 to 4, **characterized in that** it is finished on the exposed side with a leather dressing, a foam or the like.

6. Covering according to any one of Claims 1 to 5, **characterized in that** its side turned towards the air bag is finished with a leather dressing, a foam or the like.

7. Covering according to any one of Claims 1 to 5, **characterized in that** it is multilayered.

8. Process for the manufacture of a leather covering according to any one of Claims 1 to 7, **characterized in that** the leather is perforated in the region of the boundary of the air bag box while still in the undressed condition.

9. Process according to Claim 8, **characterized in that** the perforation holes are stopped with filler.

## Revendications

1. Habillage pour un tableau de bord, un volant ou similaire avec coussin d'air intégré, qui recouvre également le couvercle de la boîte du coussin d'air et est perforé dans la zone de la bordure du couvercle de la boîte du coussin d'air, et est réalisé en cuir ou simili-cuir, **caractérisé en ce que** les orifices de perforation sur la face de l'habillage tournée vers le coussin d'air présentent un plus grand diamètre que sur la face visible de l'habillage.

2. Habillage selon la revendication 1, **caractérisé en ce que** les orifices de perforation sont remplis d'un bouche-pores, d'une colle ou similaire.

3. Habillage selon la revendication 1 ou 2, **caractérisé en ce qu'**il présente une épaisseur de 0,6 mm à 2,8 mm.

4. Habillage selon l'une des revendications 1 à 3, **caractérisé en ce que** les perforations présentent des orifices d'un diamètre de 0,1 mm à 0,5 mm.

5. Habillage selon l'une des revendications 1 à 4, **caractérisé en ce que** sur sa face visible il est laqué avec un apprêt pour cuir, une mousse ou similaire.

6. Habillage selon l'une des revendications 1 à 5, **caractérisé en ce que** sa face tournée vers le coussin d'air est laquée avec un apprêt pour cuir, une mousse ou similaire.

7. Habillage selon l'une des revendications 1 à 5, **caractérisé en ce qu'**il comporte plusieurs couches.

8. Procédé de fabrication d'un habillage selon l'une des revendications 1 à 7, **caractérisé en ce que** le cuir est d'abord perforé à l'état non encore apprêté, dans la zone de bordure de la boîte du coussin d'air.

9. Procédé selon la revendication 8, **caractérisé en ce que** les orifices de perforations sont rebouchés.
